# EUROPEAN PATENT APPLICATION

(11) **EP 1 505 586 A1**
(43) Date of publication of application: **09.02.2005**
(21) Application number: 03723283.2
(22) Date of filing: 09.05.2003
(51) Int. Cl.: G11B 7/26, G11B 7/24

(54) **STAMPER STICKING METHOD AND DEVICE, AND MULTI-LAYER RECORDING MEDIUM**

(30) Priority: 09.05.2002 JP 2002133742
(71) Applicant: TDK Corporation, Tokyo 103-8272 (JP)
(72) Inventor: KANEKO, Yukio c/o TDK Corporation, Chuo-ku, Tokyo 103-8272 (JP); MURAKAMI, Yoshiaki c/o TDK Corporation, Chuo-ku, Tokyo 103-8272 (JP); YAMAGUCHI, Haruhiko c/o TDK Corporation, Chuo-ku, Tokyo 103-8272 (JP); TATSUMI, Yoshiyuki c/o TDK Corporation, Chuo-ku, Tokyo 103-8272 (JP); USAMI, Mamoru c/o TDK Corporation, Chuo-ku, Tokyo 103-8272 (JP); KOMAKI, Tsuyoshi c/o TDK Corporation, Chuo-ku, Tokyo 103-8272 (JP)
(74) Representative: Grünecker, Kinkeldey, Stockmair & Schwanhäusser Anwaltssozietät
(86) International application number: PCT/JP2003/005803
(87) International publication number: WO 2003/096332

(57) **Abstract**

A stamper is overlapped on a disk and then, the stamper (280) is lowered to the disk side in accordance with the pressure of an attaching head (356). Then, the stamper (280) is centered in accordance with fitting with a centering member and attracted by the attaching head (356). Thus, by setting a clearance of the stamper (280) to the disk (278) in accordance with lowering of the attaching head (356), it is possible to center the disk (278) and the stamper (280) and attaching can be performed in which a tilt or warpage does not occur between the disk (278) and the stamper (280).

## Description

### TECHNICAL FIELD

The present invention relates to a stamper attaching method and apparatus and a multilayer recording medium, particularly to a stamper attaching method and apparatus capable of centering a disk with a stamper and attaching the stamper to the disk and a multilayer recording medium manufactured by the apparatus.

### BACKGROUND ART

Various types of multilayer structured disks are proposed as recording media for the next generation at present.

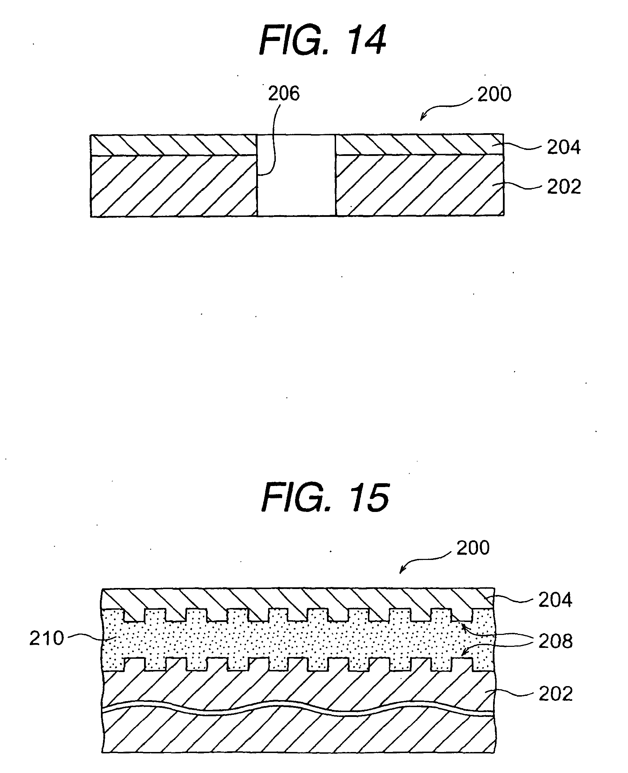

Fig. 14 is a schematic sectional view showing a structure of a reproduction-dedicated two-layer disk. As shown in Fig. 14, a reproduction-dedicated two-layer disk 200 is constituted by including a base substrate 202 having a thickness of 1.1 mm and forming a light transmission layer 204 having a thickness of 0.1 mm on either surface of the base substrate 202.

Fig. 15 is an enlarged view of the boundary portion between the base substrate and the light transmission layer in Fig. 14. As shown in Fig. 15, a spiral information pit 208 centering around a center hole 206 (refer to Fig. 14) is individually formed on the base substrate 202 and the light transmission layer 204. Moreover, a reflection layer (not illustrated) is formed on surfaces of these information pits 208 through sputtering or vapor deposition and the like and a resin layer 210 is formed between faced information pits 208 so as to fill the irregularity due to the information pits 208.

The two-layer disk thus constituted applies a laser beam from the upper portion of the light transmission layer 204 to perform read.

When forming the information pits 208 or a groove structure on the surface of the resin layer 210 of the above-described multilayer disk, various manufacturing methods are used.

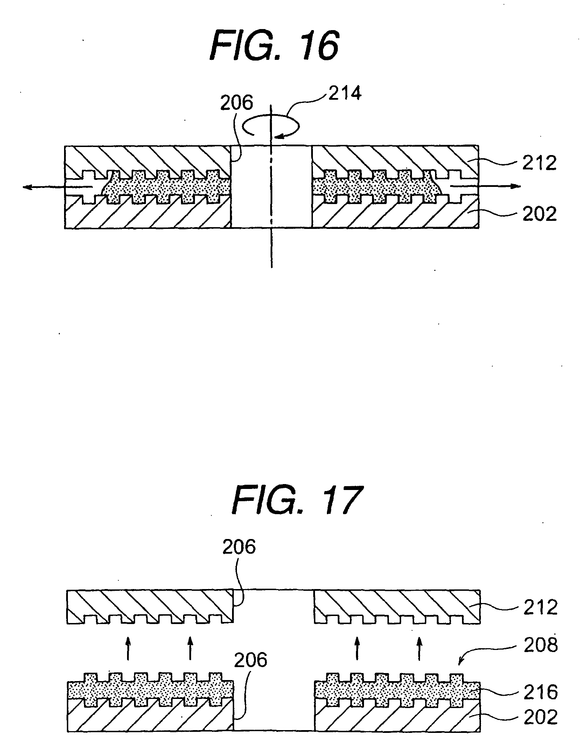

Figs. 16 and 17 are step illustrations showing a procedure for forming an information pit by using the spin coating method. To form an information pit by using the spin coating method, first as shown in Fig. 16, the base substrate 202 and a light-transmission stamper 212 are mutually attached so as to hold an ultraviolet-curing resin applied to the inner margin side of the base substrate 202 to rotate the base substrate 202 and the stamper 212 about the center hole 206 as shown by the arrow 214.

By rotating the base substrate 202 and stamper 212 together, the ultraviolet-curing resin expands toward the outer periphery of the disk in accordance with the centrifugal force and the gap between the base substrate 202 and the stamper 212 is filled with the ultraviolet-curing resin. After the gap is filled with the ultraviolet-curing resin, ultraviolet radiation is applied from the upper portion of the stamper 212 to form a resin layer 216 by curing the ultraviolet-curing resin.

Then, after the resin layer 216 is formed, the stamper 212 is raised upward as shown in Fig. 17 to remove the stamper 212 from the resin layer 216. Thus, when removing the stamper 212 from the resin layer 216, the information pit 208 transferred from the stamper 212 is exposed to the surface of the resin layer 216. Thereafter, a refection layer is formed on the surface of the resin layer 216 through sputtering or vapor deposition and then, a light transmission layer is formed through a method such as spin coating.

In the case of the above conventional example, the procedure for forming the information pit 208 on the surface of the resin layer 216 is described. This method using a stamper is not restricted to formation of the information pit 208. It is needless to say that the method can be applied to formation of a groove structure like disk go-around or to a conformation in which the groove structure is combined with an information pit.

The clearance of a stamper to a base substrate must be set so as to be uniform between tens of microns and hundreds of microns. However, when attaching a stamper on a base substrate, the stamper to be attached is approached to the base substrate. In this case, the stamper may be tilted or warped due to the weight of the stamper or the viscous resistance of an ultraviolet-curing resin (so-called resin) previously applied to the inner margin side of a base substrate.

Thus, when the stamper is tilted or warped, the thickness of the ultraviolet-curing resin (so-called resin layer) to be cured between a disk and the stamper differs and as a result, a problem occurs that the position of an upper recording layer does not become constant in the thickness direction.

### DISCLOSURE OF THE INVENTION

The present invention is made to solve the above conventional problem and its object is to provide a stamper attaching method and apparatus capable of eliminating a tilt or warpage of a stamper to be attached and attaching the stamper to a disk at a uniform clearance and a multilayer recording medium manufactured by the apparatus.

The present invention is made in accordance with the knowledge that a stamper becomes parallel with a disk and the stamper can be prevented from being warped by making tables previously plane-balanced in parallel attract backs of the disk and stamper and approaching these faced tables each other.

That is, a stamper attaching method of the present invention is a stamper attaching method for forming a state before a spin coating treatment by applying a resin to the inner margin side of a disk having a center hole and then attaching a stamper to the disk so as to hold the resin, which uses a procedure of fixing the disk to a spinner table while fitting the center hole to a centering member protruded from the spinner table to apply the resin to the inner margin side of the disk, putting the stamper on the disk through the resin and lowering the stamper to the disk side in accordance with the pressure of an attaching head, attracting the stamper by the attaching head after centering the stamper through fitting with the centering member, setting the clearance of the stamper to the disk when the attaching head lowers, and holding the clearance by the centering member.

Moreover, a stamper attaching apparatus of the present invention is a stamper attaching apparatus for performing centering of a disk having a center hole and a stamper and attaching by a resin and forming a state before a spin coating treatment, comprising:
a spinner table having disk attracting means and capable of entirely attracting either side of the disk;
a centering member protruded from the spinner table to center the disk and the stamper and hold the protrusion direction;
a dispenser having reciprocally moving means and capable of supplying the resin to the inner margin side of the disk;
an attaching head having stamper attracting means and capable of entirely attracting either side of the stamper and vertically moving for the spinner table; and
control means for making the stamper approach the spinner table when the attaching head lowers, bringing the stamper into close contact with the attaching head when the stamper attracting means is activated after the stamper is centered when the center hole is fitted to the centering member, and setting the clearance of the stamper to the disk.

Moreover, it is preferable to constitute the centering member by a hollow rubber member and a medium supplying portion to be connected to the hollow rubber member, increase the diameter of the hollow rubber member by supplying a medium to the hollow rubber member from the medium supplying portion, center the disk and the stamper, and hold the protrusion direction or constitute the centering member by a hollow rubber member and a diameter increasing member which can be inserted into the hollow rubber member, increase the diameter of the hollow rubber member by inserting the diameter increasing member into the hollow rubber member, center the disk and the stamper, and hold the protrusion direction.

Furthermore, a multilayer recording medium of the present invention is manufactured by the stamper attaching apparatus of any one of claims 2 to 4.

According to the above procedure and configuration, the center hole of a disk is first fitted to a centering member protruded from a spinner table to center the disk for the spinner table. Then, the disk is centered and brought into close contact with the spinner table by activating disk attracting means. Thus, by bringing the disk into close contact with the spinner table, the disk follows the surface of the spinner table. Therefore, it is possible to prevent the disk rising or the like.

Moreover, after bringing the disk into close contact with the spinner table, the discharge port of the dispenser is moved to the inner margin side of the disk by activating the reciprocally moving means to apply resin to the inner margin side of the disk. After application of the resin is completed, it is only necessary to activate the reciprocally moving means and back the position of the dispenser up to a position at which the dispenser does not interfere with the disk. The resin used here can use any resin as long as the resin can be cured after filling the gap between the disk and stamper. Specifically, it is preferable to use an ultraviolet-curing resin or the like.

After applying the resin to the inner margin side of the disk, the stamper is lowered from the upper portion of the disk. Then, when the fitting degree of the center hole of the stamper and the centering member increases because the stamper lowers, axle center of the stamper coincides with the axle center of the disk. After the axle center of the disk coincides with that of the stamper, the stamper is fixed to an attaching head for pressing the stamper by activating the stamper attracting means of the attaching head. Thus, by attracting the stamper after the stamper is centered, it is possible to make the stamper approach the disk without the fact that the axle center with the disk is not shifted. In this case, because the stamper is fixed to the attaching head, it is needless to say that the stamper always becomes parallel with the disk located below and it is possible to prevent a warpage from occurring by the weight of the stamper or viscous resistance of the resin applied to the inner margin side of the disk.

It is previously studied that the center hole of the stamper coincides with the axle center of the disk by deciding how long the center hole of the stamper is fitted to the centering member and the obtained value is stored by control means. Then, when the stamper exceeds this value and approaches the disk, the control means determines that the stamper is centered, the stamper attracting means fixes the stamper in accordance with a designation from the control means, and the stamper is approached to the disk up to a preset distance. Moreover, after the clearance of the stamper is set to the disk, the centering member presses an end face of the center hole of the stamper. Therefore, the height direction of the stamper is held by the centering member and the clearance with the disk is kept.

Thus, when the clearance is made constant in all regions by arranging the disk and the stamper in parallel, the resin expands from the inner margin side of the disk to the outer margin side of it by rotating (spinning) the spinner table about the centering member and it is possible to form a resin layer having a constant thickness. Therefore, it is possible to keep the position of an upper recording layer constant in the thickness direction.

When the centering member is constituted by a hollow rubber member and a medium supplying portion to be continued to the hollow rubber member, it is possible to uniformly expand the hollow rubber member centering around the center by introducing a medium into the hollow rubber member from the medium supplying portion. Moreover, it is possible to center the disk and the stamper by this expansion. Furthermore, by setting the outer shape of the hollow rubber member before expansion to a value smaller than the inside diameter of the center hole, it is possible to prevent an end face of the center hole of the disk from sliding to the hollow rubber member when setting the disk to the spinner table. Thus, because extra slide does not occur, it is possible to prevent dust from being produced due to the slide or the dimension of the centering member from fluctuating.

Moreover, because the end face of the center hole is pressed due to the expansion, it is possible to improve the holding power of the stamper. Therefore, even if a torque is transferred from the hollow rubber member to the stamper by spin coating which is a post-process or an unexpected disturbance is applied to the stamper, it is possible to prevent relative positions of the stamper and centering member from fluctuating.

Furthermore, the peculiar effect of the hollow rubber member can be also achieved by inserting a diameter increasing member into the hollow rubber member instead of the medium supplying portion. Thus, when the diameter increasing member can be inserted into the hollow rubber member, it is possible to eliminate the pipe laying route of the medium. It is needless to say that the force applied to the end face of the center hole is uniformed and it is possible to improve the centering accuracy in accordance with the elastic deformation of the hollow rubber member between the'end face of the center hole and the diameter increasing member.

### BRIEF DESCRIPTION OF THE DRAWINGS

Fig. 1 is a schematic top view of a groove forming apparatus to which the stamper attaching apparatus of this embodiment is applied as a stamper attaching portion;
Fig. 2 is an enlarged view of the stamper removing portion in Fig. 1;
Fig. 3 is a BB sectional view in Fig. 2;
Fig. 4 is an enlarged view of the essential portion in Fig. 3;
Fig. 5 is a state illustration showing a state in which a disk and a stamper pass through a stamper attaching portion;
Fig. 6 is a state illustration showing a state in which a disk and a stamper pass through a stamper attaching portion;
Fig. 7 is a state illustration showing a state in which a disk and a stamper pass through a stamper attaching portion;
Fig. 8 is a state illustration showing a state in which a disk and a stamper pass through a stamper attaching portion;
Fig. 9 is a state illustration showing a state in which a disk and a stamper pass through a stamper attaching portion;
Fig. 10 is a state illustration showing a state in which a disk and a stamper pass through a stamper attaching portion;
Fig. 11 is a state illustration showing a state in which a disk and a stamper pass through a stamper attaching portion;
Fig. 12 is a graph showing a relation between lowering distances of an attaching head and times;
Fig. 13 is a sectional illustration showing another embodiment of a centering member;
Fig. 14 is a schematic sectional view showing a structure of a rewritable two-layer disk;
Fig. 15 is an enlarged view of the boundary portion between the base substrate and the light transmission layer in Fig. 14;
Fig. 16 is a step illustration showing a procedure for forming a groove layer by using the spin coating method; and
Fig. 17 is a step illustration showing a procedure for forming a groove layer by using the spin coating method.

### BEST MODE FOR CARRYING OUT THE INVENTION

A stamper attaching method and apparatus, and a specific embodiment preferable for a multilayer recording medium are described below in detail with reference to the drawings.

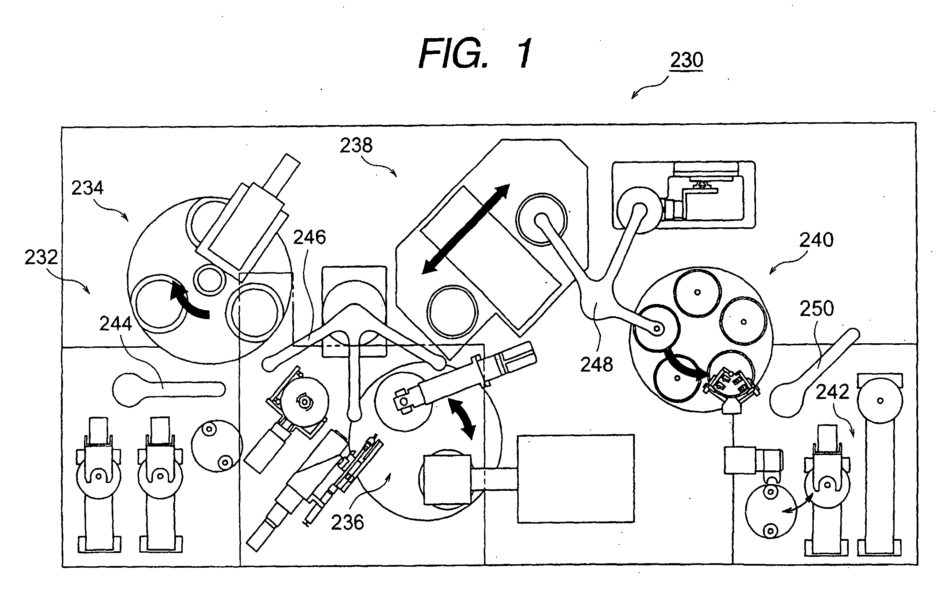

Fig. 1 is a schematic top view of a groove forming apparatus to which a stamper attaching apparatus of this embodiment is applied as a stamper attaching portion. In the case of this embodiment, an apparatus having a stamper removing portion is used as a groove forming apparatus. However, the apparatus is not restricted to formation of a groove structure. It is also allowed to use the apparatus to form an information pit like disk go-around instead of the groove structure or form the groove structure and the information pit by combining them.

A groove forming apparatus 230 to which the stamper attaching apparatus of this embodiment is applied as a stamper attaching portion forms a groove structure at the upper-layer recording side of a rewritable two-layer disk which provides a multilayer recording medium. Moreover, as shown in Fig. 1, the groove forming apparatus 230 includes a disk-stamper supplying portion 232 for supplying a disk and a stamper, a cleaner portion 234 for cleaning the surface of the disk, stamper attaching portion 236 for attaching a stamper to the above disk, an ultraviolet applying portion 238 for curing the ultraviolet-curing resin between the disk and the stamper to form a resin layer, a stamper removing portion 240 for removing the stamper from the disk, and a disk discharging portion 242 for discharging the disk and stamper. Moreover, a supply arm 244, first transfer arm 246, second transfer arm 248, and discharge arm 250 are set between these components so that the disk and stamper can be carried to the rear stage side in accordance with the rotation of these arms.

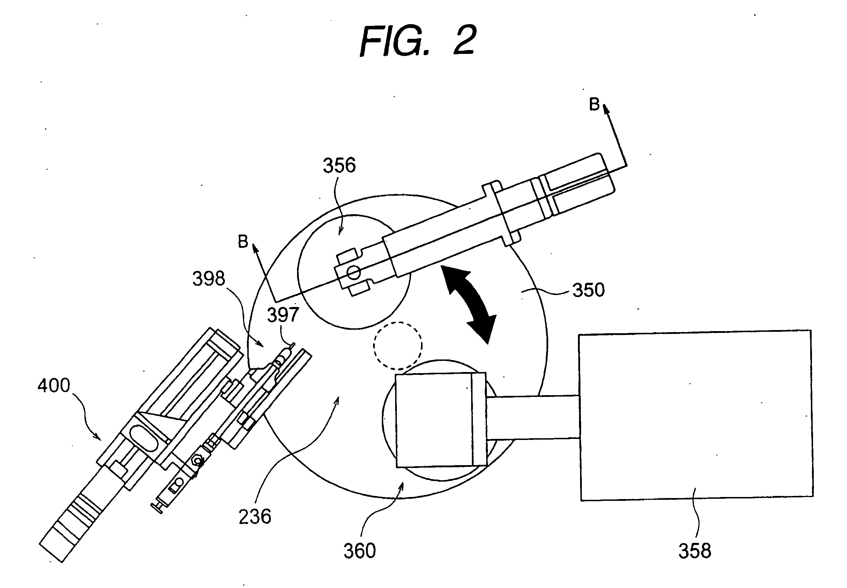

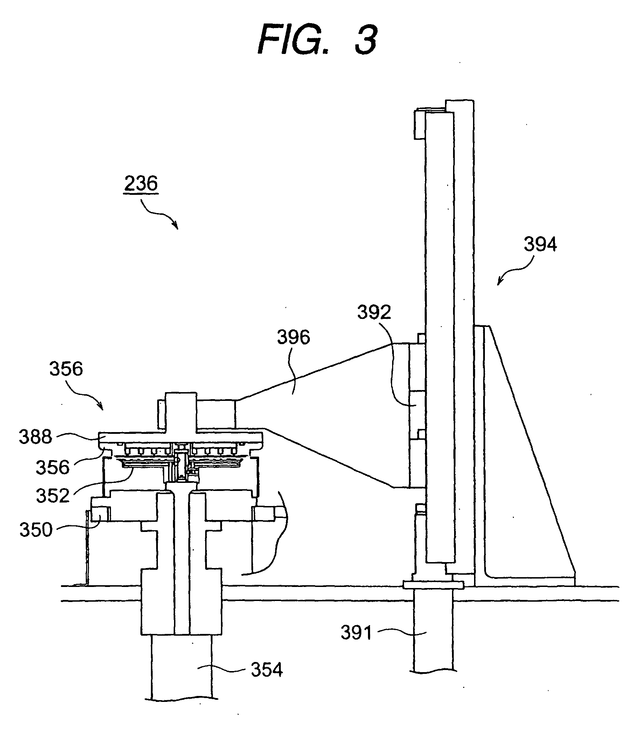

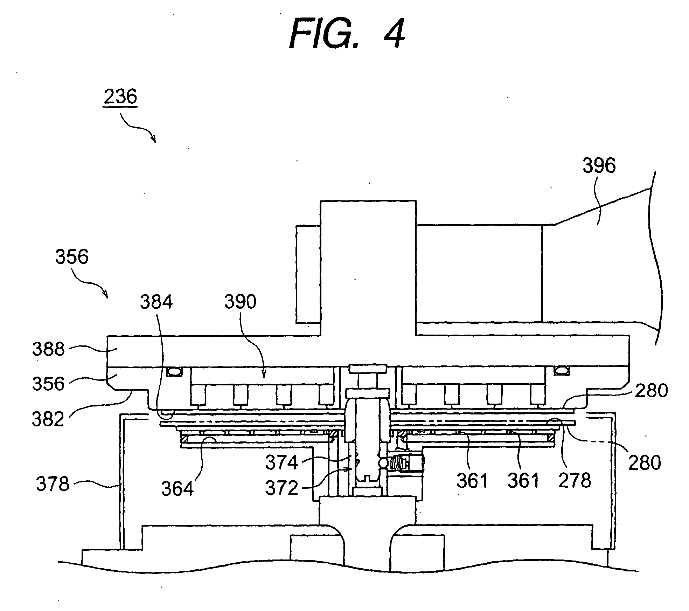

Fig. 2 is an enlarged view of the stamper removing portion in Fig. 1, Fig. 3 is the BB sectional view in Fig. 2, and Fig. 4 is an enlarged view of the essential portion in Fig. 3.

As shown in these drawings, the stamper attaching portion 236 is provided with a discoid attaching table 350 which can be rotated by 180° by a not-illustrated cam unit. Moreover, the attaching table 350 is provided with a pair of spinner tables 352 about the rotation center. Each of the spinner tables 352 is constituted by a discoid conformation similarly to the attaching table and a whirling servomotor 354 is set under the spinner tables 352. Furthermore, the rotating shaft of the whirling servomotor 354 is connected to the central portion of the spinner tables 352 and the spinner tables 352 can be rotated by activating the whirling servomotor 354.

Furthermore, an attaching head 356 and a first UV irradiator 358 are set above the attaching table 350 so as to correspond to positions of a pair of spinner tables 352. By combining the attaching head 356 and the first UV irradiator 358 with spinner tables 352 respectively, the stamper attaching portion 236 serving as the stamper attaching apparatus of this embodiment and a temporary-curing UV irradiator 360 are formed.

The spinner table 352 for constituting the stamper attaching portion 236 is described below.

The outside diameter of the discoid spinner table 352 is set to a dimension slightly smaller than the outside diameter of a disk 278 to be attached. Moreover, a 364 headed for the central portion of the spinner table 352 is formed at the side of the spinner table 352. A plurality of attraction ports 361 communicating with the bore 364 are formed on the surface of the spinner table 352 nearby the bore 364. By connecting a not-illustrated disk attraction means (so-called vacuum pump or the like) to the end opening of the bore 364, the inside of the bore 364 is brought into a negative pressure space and attraction is performed from the attraction ports 361 so that the disk 278 can be attracted by the disk attracting portion 364. A concave portion (not illustrated) is formed between bores 364 at the back of the spinner table 352 so as to decrease the weight of the spinner table 352.

Furthermore, in the case of the spinner table 352, a cylindrical hollow rubber member 370 constituting a centering member is set so as to protrude from the central portion of the table 352 and a diameter increasing member 372 is set in the hollow rubber member 370. The diameter increasing member 372 is set along the inner wall of the hollow rubber member 370 and a pressing wall 374 movable in the radius direction of the hollow rubber member and a center pin 376 to be protruded upward along the shaft center of the hollow rubber member 370 in the pressing wall 374 are arranged. By lowering the center pin 376 by the first transfer arm 246 having an L-shaped pawl, the diameter of the pressing wall 374 is increased, the hollow rubber member 370 is pressed against the sidewall of the center hole of the disk 278, and the disk 278 is centered for the hollow rubber member 370.

A guide plate 378 is set outside of the spinner table 352 so as to surround the spinner table 352. Moreover, when the guide plate 378 surrounds the spinner table 352, it is possible to prevent dust from coming from the outside of the stamper attaching portion 236 and depositing on the surface of the disk 278 attracted by the spinner table 352.

However, the attaching head 356 forming the stamper attaching portion 236 is constituted as described below.

The attaching head 236 is constituted by a disk having a flange portion 382 and a stamper setting face 384 for closely contacting the stamper 280 through attraction is formed at the small diameter side of the head 236 facing the spinner table 352. The stamper setting face 384 is formed so that the outside diameter of it becomes slightly larger than the outside diameter of the stamper 280 so that the entire surface of the stamper 280 can be pressed by the attaching head 236.

A depression 390 is formed at the side facing an attaching plate 388 combined to vertically move the attaching head 236 at the opposite side to the stamper setting face 384 on the attaching head 236 to form an air attracting route connected to stamper attracting means (so-called vacuum pump or the like not illustrated) set to the attaching plate 388 by setting the attaching head 236 to the attaching plate 388. A plurality of depressions 390 respectively have a small diameter from the contact side with the attaching plate 388 up to the stamper setting face. 384. Thus, it is possible to improve the close contact degree of the stamper 280 with stamper setting face 384 by attracting the stamper 280 contacting with the stamper setting face 384 by a plurality of small-diameter holes and prevent the stamper 280 from deforming due to the holes. In the case of the above attaching head 236, the depression 390 has a complex shape. Therefore, it is allowed to form the attaching head 236 by not only a method of machining the attaching head 236 but also a sintering method.

A ball screw connecting with a vertically-moving servomotor 391 and a single-axis unit 394 constituted by a vertically-moving stage 392 capable of reciprocally moving in accordance with the rotation of the ball screw are vertically set to the side of the attaching head 236 thus constituted. Moreover, a connecting arm 396 is set between the vertically-moving stage 392 and the attaching plate 388 to vertically move the attaching plate 388 together with the vertically-moving stage 392.

A dispenser 398 having a discharge nozzle 397 at its front end is set to a position not interfering with the single-axis unit 394 around the spinner table 352. In this case, a ball screw mechanism 400 serving as reciprocally moving means through servomotor driving is set to the dispenser 398. The dispenser 398 is advanced by activation of the ball screw mechanism 400 so that an ultraviolet-curing resin which becomes a resin by the discharge nozzle 397 can be applied to the inner margin of the disk 278.

Rotation of the above-described attaching table 350, the whirling servomotor 354, vertically-moving servomotor 391, disk and stamper attracting means, and dispenser 398 are all connected to not-illustrated control means and rotation and vertical movement or the like are performed in accordance with an activation signal from the control means.

A procedure for attaching the stamper 280 to the disk 278 is described below by using the groove forming apparatus 230 thus constituted.

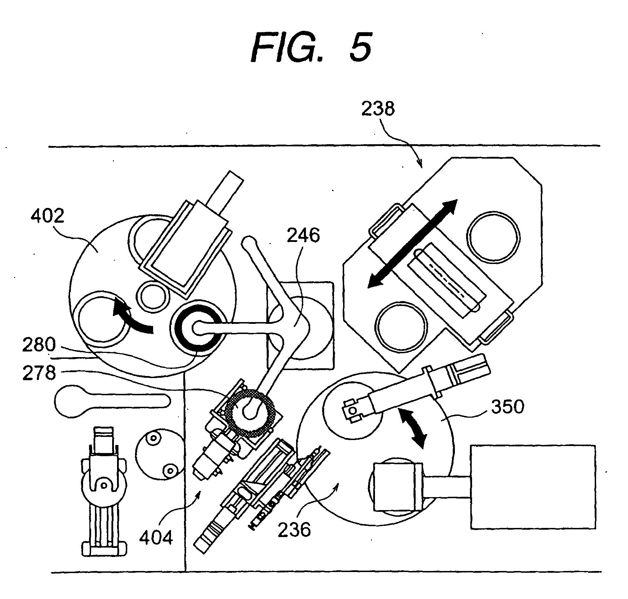

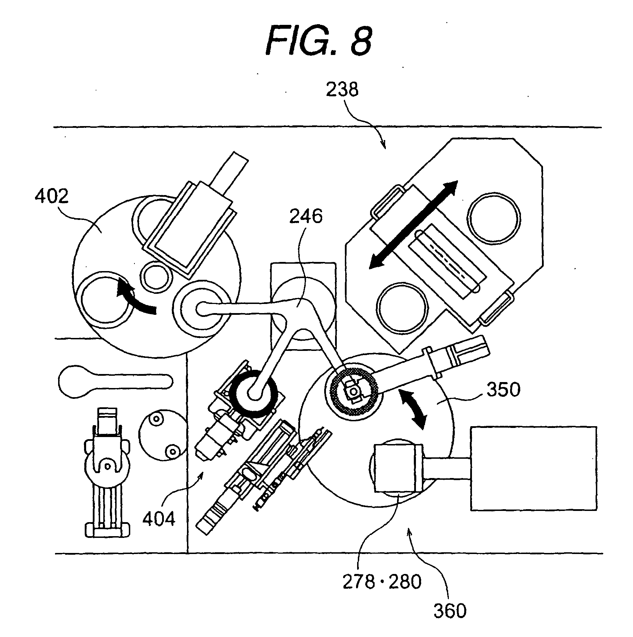

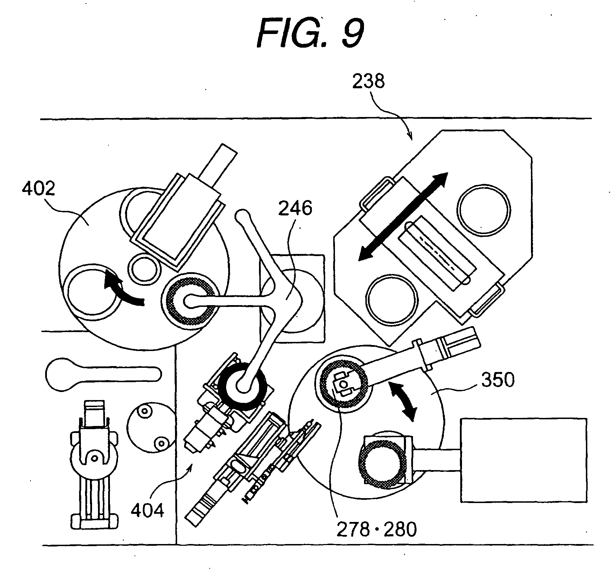

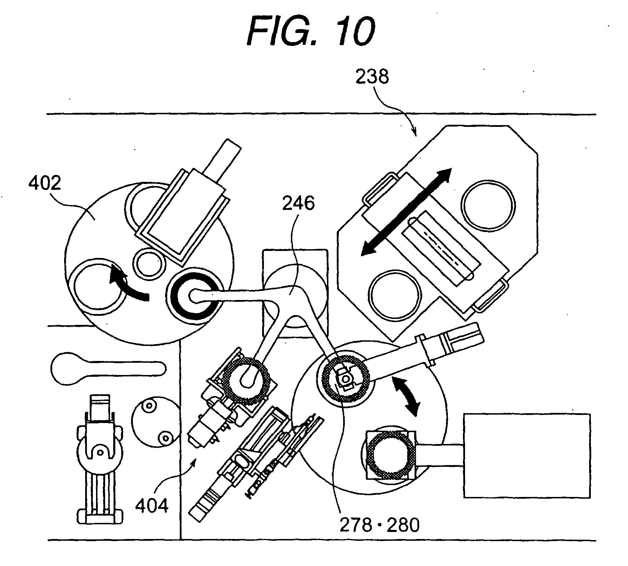

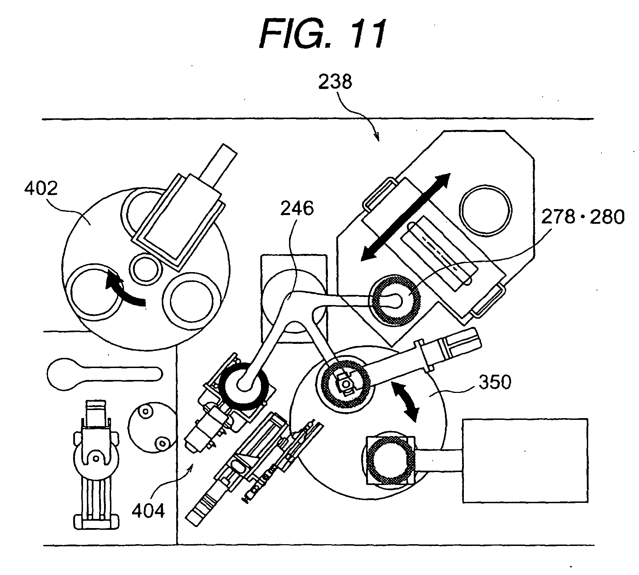

Figs. 5 to 11 are a state illustration showing a state in which a disk and a stamper pass through a stamper attaching portion.

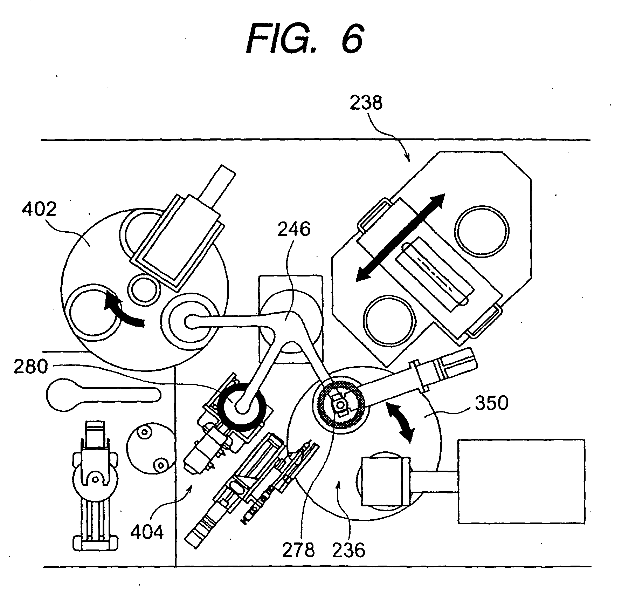

First, as shown in Fig. 5, the disk 278 is transferred to a stamper reversing chuck 404 from the cleaner portion 234 by using the first transfer arm 246. Then, as shown in Fig. 6, the disk 278 held by the stamper reversing chuck 404 is transferred to the spinner table 352 by rotating the first transfer arm 246 again and the stamper 280 mounted on the cleaner portion 234 is transferred to the stamper reversing chuck 404. The first transfer arm 246 can vertically move (paper thickness direction in Fig. 6) in accordance with its rotation. Therefore, the arm portion of the first transfer arm 246 presses the center pin 376 protruded from the spinner table 352 when the first transfer arm 246 lowers and the pressing wall 374 expands in the diameter direction when the center pin 376 lowers to press the inner wall of the center hole of the disk 278 through the hollow rubber member 370. Therefore, the disk 278 is centered so as to coincide with the rotation center of the spinner table 352 and the disk 278 is brought into close contact with the surface of the spinner table 352 in accordance with the negative pressure by the disk attracting means. The control means determines that the disk 278 is mounted on the spinner table 352 in accordance with the rotation of the first transfer arm 246 and then, activates the disk attracting means, and attracts the disk 278.

Thus, after attracting the disk 278 by the spinner table 352, the control means activates the ball screw mechanism 400 and advances the dispenser 398. Moreover, when the discharge nozzle 397 set to the front end of the dispenser 398 reaches the inner margin side of the disk 278, it stops the ball screw mechanism 400, rotates the disk 278 by activating the whirling servomotor 354, discharges an ultraviolet-curing resin from the front end of the discharge nozzle 397, and applies the ultraviolet-curing resin to the inner margin side of the disk 278. Moreover, by synchronizing and rotating the spinner table while moving the dispenser from the inner periphery to the outer periphery or from the outer periphery to the inner periphery by the ball screw driven by the servomotor, it is possible to spirally apply the resin. Then, after applying the ultraviolet-curing resin by a previously set quantity, it is only necessary to move the dispenser 398 backward from the disk 278 up to the original position by activating the ball screw mechanism 400 again.

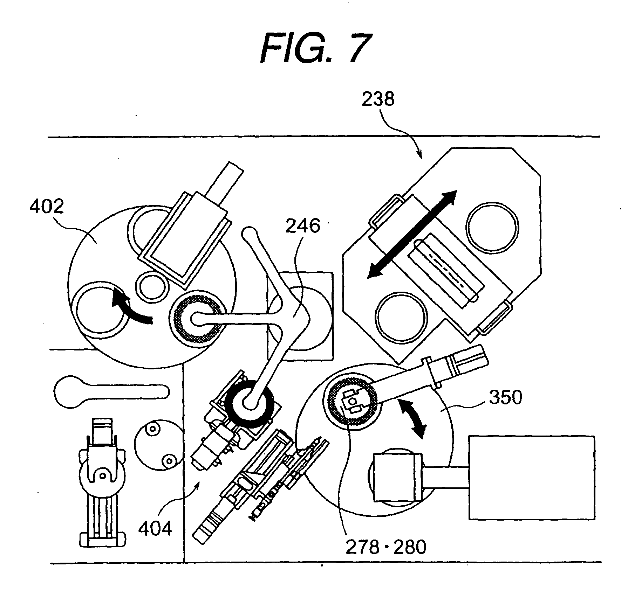

Thus, after applying the ultraviolet-curing resin to the inner margin side of the disk 278, the stamper 280 is put above the disk 278 from the stamper reversing chuck 404 by rotating the first transfer arm 246 again. Thus, when the stamper 280 is released from the first transfer arm 246, the center hole of the stamper 280 contacts with the outer surface of the hollow rubber member 370 whose outside diameter is expanded by the pressing wall 374 and the stamper 280 is held by the hollow rubber member 370 while keeping a sufficient distance from the disk 278. Fig. 7 shows a state in which the disk 278 overlaps with the hollow rubber member 280. The attaching head 356 constituting the stamper attaching portion 236 together with the spinner table 352 waits above so as to have a sufficient distance from the spinner table 352. Therefore, even if the first transfer arm 246 moves to the upper portion of the spinner table 352, the height-directional position of the arm 246 becomes the lower side of the attaching head 356 and it is possible to prevent that the both interfere each other.

When the stamper 280 is held above the disk 278, the control means activates the vertically-moving servomotor 391 and lowers the attaching head 356 toward the stamper 280 together with the vertically-moving stage 392, connecting arm 396, and attaching plate 388.

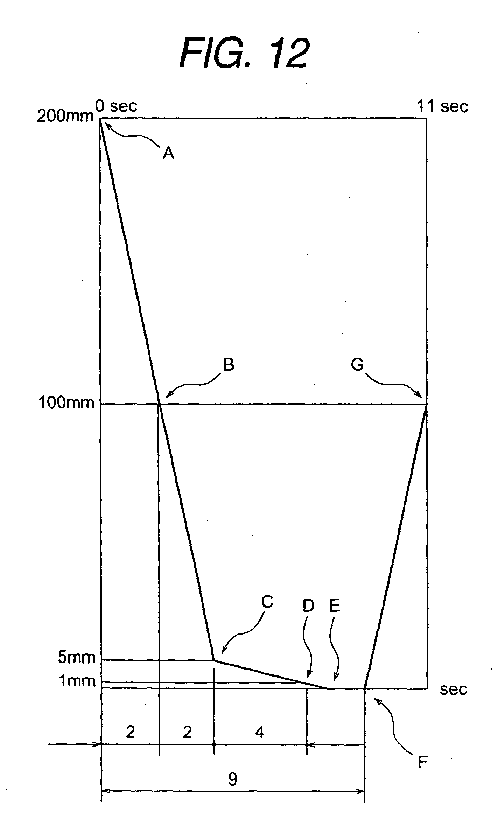

Fig. 12 is a graph showing a relation between lowering distances of an attaching head and times. The height of the attaching head 356 from the stamper attaching position is set to 200 mm as shown by the point A in Fig. 12 when the first transfer arm 246 enters the upper portion of the spinner table 352. Moreover, the attaching head 356 lowers from the position of the point A up to the automatic operation waiting position (100 mm) shown by a point B in 2 sec and then, lowers from the position of the point B up to the contact position (5 mm) with the stamper 280 shown by a point C in 2 sec. Thus, after bringing the attaching head 356 into contact with the stamper 280, the descending speed is decreased to lower the head 356 up to the stamper attaching height shown by a point E at a constant speed. In this case, when the stamper 280 located at the middle of the hollow rubber member 370 lowers together with the attaching head 356, the stamper 280 is centered by the hollow rubber member 370 at the height of a point D (1 mm) the same as the case of the disk 278. It is possible to optionally set the height of the point D in accordance with the specification of the stamper 280 or other reason and it is only necessary to freely set the height in accordance with the expansion degree of the diameter increasing member 372 set inside of the hollow rubber member 370. Moreover, by previously storing the height at which the stamper 280 is centered in the control means (1 mm in the case of this embodiment), when the attaching head 356 reaches the point D, the control means activates the stamper attracting means and attracts the stamper 280 to the stamper setting face 384. The time when the attaching head 356 reaches from the point C to the point D is set to 4 sec.

Thus, when the attaching head 356 reaches the point D, the stamper 280 is centered by the hollow rubber member 370 as described above. Therefore, it is only necessary to attract the stamper 280 to the stamper setting face 384 and lower the stamper 280 up to a previously-set attaching height shown by the point E in Fig. 12 while holding the centering position of the stamper 280 (while holding the radius-directional position). The attaching height of the stamper 280 to the disk 278 (so-called clearance) is optionally set to a value between tens of microns and hundreds of microns.

Moreover, after the attaching head 356 reaches the point E and the attaching height of the stamper 280 to the disk 278 is set, the attaching head 356 is raised from a point F to a point G. When raising the attaching head 356, the stamper attracting means is stopped by the control means so that the attaching head 356 can be easily separated from the stamper 280. After raising the attaching head 356 up to the point G, the attaching table 350 is rotated by 180° and the disk 278 and stamper 280 attached together are moved to the temporary UV irradiating portion 360 together with the spinner table 350. Then, the disk 278 and stamper 280 attached together are rotated by the temporary UV irradiating portion 360, the diameter of an ultraviolet-curing resin is increased by the centrifugal force of the rotation of them from the inner margin side of the disk outward and the gap between the disk 278 and the stamper 280 is filled with the ultraviolet-curing resin. Then, the first UV irradiator 358 is activated together with the spinning treatment, ultraviolet radiation is applied to the ultraviolet-curing resin through the stamper 280 to cure the ultraviolet-curing resin up to a degree at which the thickness does not fluctuate (so-called temporary curing step).

Then, after the temporary curing step is completed, it is only necessary to rotate the attaching table 350 by 180° again and move the disk 278 and stamper 280 attached together to the stamper attaching portion 236 together with the spinner table 350 and thereafter, hold the disk.278 and stamper 280 by using the first transfer arm 246 and; make the ultraviolet irradiating portion 238 carry the disk 278 and stamper 280, and permanently cure the ultraviolet-curing resin by the ultraviolet irradiating portion 238.

In the above description, a state is described in which one disk 278 (and stamper 280) passes through a stamper attaching portion. However, it is wished to understand that three arm portions set to the first transfer arm 246 simultaneously function and a plurality of disks 278 (and stampers 280) pass through the stamper attaching portion in the case of an actual operation.

In the case of this embodiment, the pressing wall 374 and center pin 376 are set in the hollow rubber member 370 to increase the diameter of the hollow rubber member 370. However, it is also allowed to use another conformation.

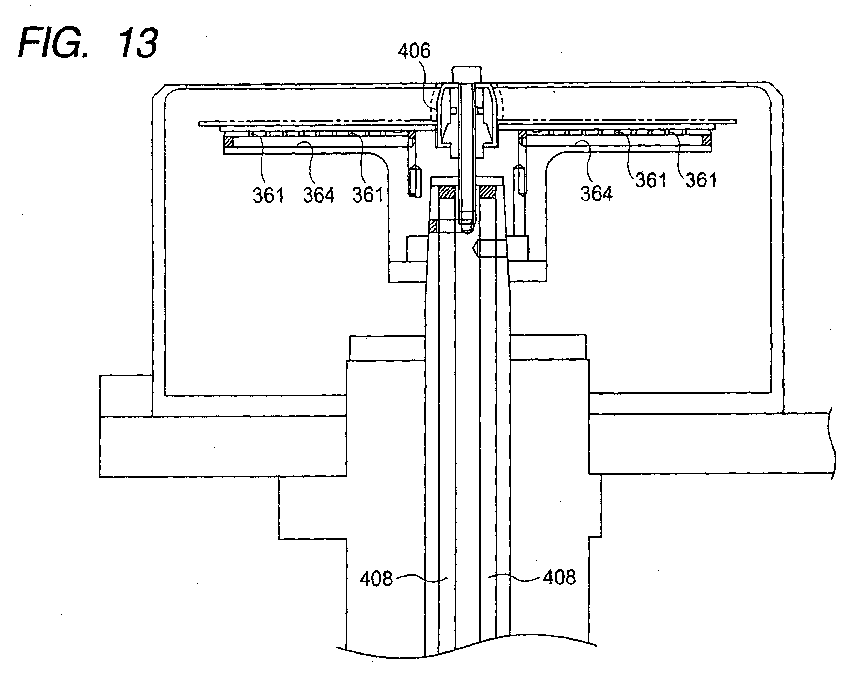

Fig. 13 is a sectional view showing another conformation of a centering member. Because portions other than the centering member have the same as those of the above-described spinner table 352, the same number is provided for a common portion and the common portion is described.

As shown in Fig. 13, a bag-like hollow rubber member 406 is set to the spinner table 352 so as to protrude from the central portion of the table 352. Moreover, a pair of air pipes 408 to be connected to the hollow rubber member 406 are set below the hollow rubber member 406. The other end of the air pipe 408 is connected to a not-illustrated pressure supplying means. Thus, when connecting the pressure supplying means to the bag-like hollow rubber member 406 through the air pipe, the diameter of the hollow rubber member 406 can be increased by introducing air into the hollow rubber member 406, the outside diameter of the hollow rubber member 406 can be decreased by discharging air from the inside of the hollow rubber member 406, and the disk 278 can be easily centered or taken out. The present inventor used silicon rubber as the material of the hollow rubber member by noticing that the silicon rubber has a characteristic that it is superior in abrasion resistance and it has a small hardness change even if temperatures are changed. However, it is also allowed to select an optional material in accordance with a purpose or operating environment.

As described above, according to the present invention, a stamper is overlapped on a disk and then, the stamper is lowered to the disk side in accordance with the pressure of an attaching head. Then, the stamper is centered in accordance with fitting with a centering member and attracted by the attaching head. Thus, by setting a clearance of the stamper to the disk in accordance with lowering of the attaching head, it is possible to center the disk and stamper and perform attachment so that a tilt or warpage does not occur between the disk and stamper.

## Claims

1. A stamper attaching method for attaching stamper so as to hold a resin after applying the resin to the inner margin side of a disk having a center hole, comprising:
a step of fixing the disk to a spinner table while fitting the center hole to a centering member protruded from the spinner table to apply the resin to the inner margin side of the disk;
a step of fitting the centering member to the center hole of the stamper;
a step of overlapping the stamper on the disk through the resin and lowering the stamper up to the disk side in accordance with the pressure of an attaching head;
a step of attracting the stamper by the attaching head after the stamper is centered in accordance with fitting with the centering member; and
a step of setting a clearance of the stamper to the disk when the attaching head lowers and holding the clearance by the centering member.

2. A stamper attaching apparatus for centering a disk having a center hole and a stamper and attaching them together by a resin to form a state before spin coating treatment, comprising:
a spinner table having disk attracting means and capable of entirely attracting the entire either side of the disk;
a centering member protruded from the spinner table to center the disk and the stamper and hold the protruding direction;
a dispenser having reciprocally moving means and capable of supplying the resin to the inner margin side of the disk;
an attaching head having stamper attracting means and making it possible to entirely attract either side of the stamper and capable of vertically moving on the spinner table; and
control means for setting a clearance of the stamper to the disk by making the stamper approach the spinner table in accordance with lowering of the attaching head and brining the stamper in close contact with the attaching head in accordance with activation of the stamper attracting means after the stamper is centered in accordance with fitting of the center hole to the centering member.

3. The stamper attaching apparatus according to claim 2, **characterized in that**
the centering member is constituted by a hollow rubber member and a medium supplying portion to be connected to the hollow rubber member and the diameter of the hollow rubber member is increased by supplying a medium to the hollow rubber member from the medium supplying portion to center the disk and the stamper and hold the protruding direction.

4. The stamper attaching apparatus according to claim 2, **characterized in that**
the centering member is constituted by a hollow rubber member and a diameter increasing member which can be inserted into the hollow rubber member, the diameter of the hollow rubber member is increased by inserting the diameter increasing member into the hollow rubber member, the disk and the stamper are centered, and the protruding direction is held.

5. A multilayer recording medium manufactured by the stamper attaching apparatus of any one of claims 2 to 4.
